# EUROPEAN PATENT SPECIFICATION

(11) **EP 4 672 662 B1**
(45) Date of publication and mention of the grant of the patent: **25.11.2026**
(21) Application number: 24306047.2
(22) Date of filing: 28.06.2024
(51) Int. Cl.: H04L 9/00, H04L 9/08

(54) **OPTIMIZED HAMMING QUASI-CYCLIC POST-QUANTUM CRYPTOGRAPHIC METHOD**
OPTIMISIERTES POSTQUANTISCHES QUASI-HAMMING-ZYKLISCHES VERSCHLÜSSELUNGSVERFAHREN
PROCÉDÉ CRYPTOGRAPHIQUE POST-QUANTIQUE OPTIMISÉ QUASI-CYCLIQUE SUR HAMMING

(43) Date of publication of application: 31.12.2025
(73) Proprietor: Commissariat à l'Energie Atomique et aux Energies Alternatives, 75015 Paris (FR)
(72) Inventor: LOISEAU, ANTOINE, 38054 GRENOBLE CEDEX 9 (FR)
(74) Representative: Lavoix

(56) References cited:
- SCHAMBERGER THOMAS ET AL: "A Power Side-Channel Attack on the CCA2-Secure HQC KEM", 29 January 2021, SPRINGER, PAGE(S) 119 - 134, XP047581115
- DRAGOI VLAD ET AL: "Survey on cryptanalysis of code-based cryptography: From theoretical to physical attacks", 2018 7TH INTERNATIONAL CONFERENCE ON COMPUTERS COMMUNICATIONS AND CONTROL (ICCCC), IEEE, 8 May 2018 (2018-05-08), pages 215 - 223, XP033361560, DOI: 10.1109/ICCCC.2018.8390461

## Description

The present invention concerns post-quantum cryptographic methods based on Error-Correcting Codes, in particular post-quantum cryptographic methods belonging to the Hamming Quasi-Cyclic - HQC scheme type.

Asymmetric cryptographic methods are well-known. When two end devices, generally referred to as Alice and Bob, want to share a secret message (in particular an encryption key to be used for securing further exchanges), an asymmetric cryptographic method can be realized to transfer this message from Bob to Alice. Generally speaking, Alice generates a pair of keys, comprising a private key and a public key. Alice transmits her public key to Bob. Bob encrypts the message with Alice's public key and transmits the ciphertext to Alice. Alice retrieves the original message from the ciphertext using her private key. Thus, Bob and Alice now share the message.

However, it is thought that the basic asymmetric cryptographic methods, that are currently widely used, could be broken by a quantum algorithm running on a quantum computer.

It is the reason why new asymmetric cryptographic methods are looked after that could resist attacks by quantum algorithms. This asymmetric cryptographic methods are called post-quantum cryptographic methods.

Among the post-quantum cryptographic methods that have been identified to date, the Hamming Quasi-Cyclic - HQC scheme, that belongs to the specific group of post-quantum cryptographic methods based on Error-Correcting Code - ECC, should be standardized in the near future by the National Institute of Standards and Technology - NIST.

The HQC scheme is presented in details in the article C. Aguilar Melchor et al., «Hamming Quasi-Cyclic (HQC)», publishes on 23 February 2024, which corresponds to the fourth round of standardization of the HQC scheme. This article can be downloaded at the URL: "https://csrc.nist.gov/Projects/post-quantum-cryptography/round-4-submissions".

As explained in this article, the HQC scheme uses two types of codes: a decodable [n, k] code C, defined by a generator matrix $G ∈ {F}_{2}^{k \times n}$, and which can correct at least Δ errors, via an efficient algorithm C. Decode(.); and a random double-circulant [2n, n] code, of parity-check matrix (1,**h**).

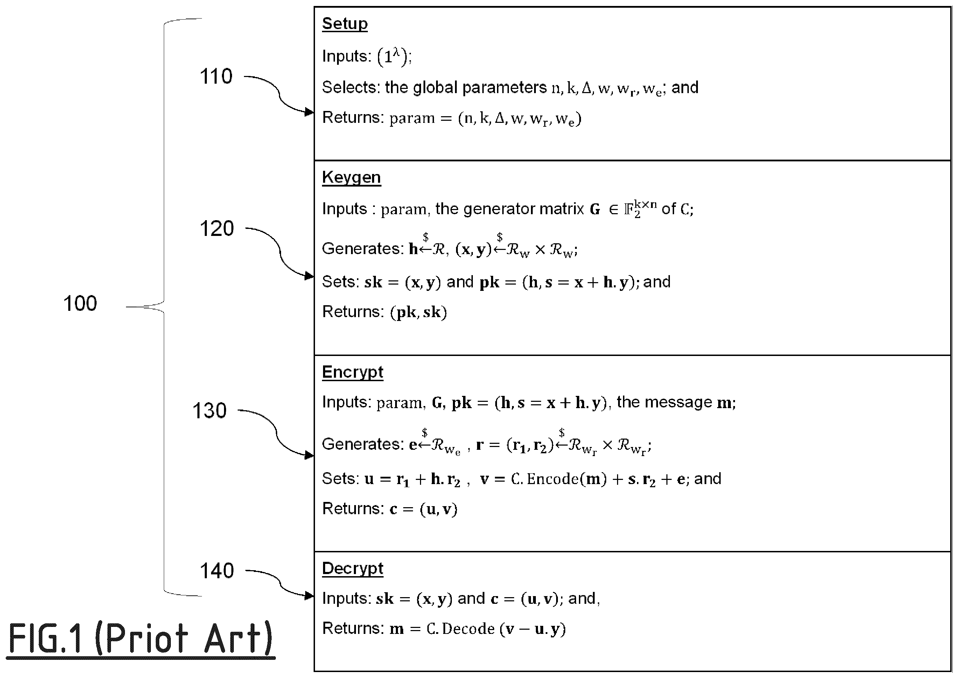

Following the notations used in this article, an embodiment of the HQC scheme is illustrated in Figure 1.

The HQC scheme 100 has four successive steps:
- In the setup step 110, the global parameters of the algorithm are set based on the security level *λ* that is chosen. The variable *param* regroups the integers n, k, Δ, w, wᵣ and wₑ.
- In the key generation step 120, performed by Alice, a pair of keys is computed, made up of a public encryption key **pk** and a private decryption key **sk.** In addition to some of the global parameters, this step of the HQC scheme uses additional parameters: **h** is randomly selected in the set 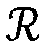 and the pair (x, y) is randomly selected in the set 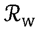 × 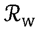 , where 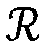 is the set of the binary words having a size of n bits, and 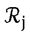 is the sub-set of 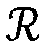 gathering the binary words having exactly j bits equal to 1; the generator matrix **G** of the code 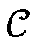 is publicly known. This is a matrix of k × n binary elements. In the HQC scheme the private decryption key sk is a pair of binary words of size n, **x** and **y**, while the public encryption key **pk** is a pair of binary words of size n, **h** and **s,** where **s** is the sum of **x** and **h**. **y**. The operator "." will be discussed in detail below.
- In the encryption step 130, performed by Bob, a ciphertext **c** is computed based on the message **m** to be exchanged with Alice (**m** is a binary word of k bits). The ciphertext **c** is of pair of binary words of size n, **u** and **v.** In addition to some of the global parameters, this step of the HQC scheme uses additional parameters: e is randomly selected in the set 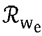 , and the pair (**r₁**, **r₂**) is randomly selected in the set 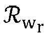 × 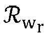 . **u** of the ciphertext c is then the sum of **r₁** and **h**.**r₂** and **v** is the sum of C. Encode(**m**), **s. r₂** and **e,** where C. Encode(**m**) corresponds generally to the left product of the binary word **m,** seen as a vector, with matrix **G** (an can is often written as **mG**).
- Finally, in the decryption step 140, performed by Alice on reception of the ciphertext **c** sent by Bob, the original message **m** is retrieved using the private decryption key **sk** known from Alice only. To this end the algorithm 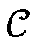 . Decode(.) is applied on **v** minus **u. y.**

The HQC scheme presents very promising properties in terms of robustness against attacks, error correction, and so on.

However, the HQC scheme is relatively burdensome in terms of computation time or memory footprint.

In particular, the operator "." corresponds to the product of two binary polynomials, whose size n depends on the level of security that is chosen.

Indeed, a word of *n* bits is mathematically equivalent to a binary polynomial of degree n-1, whose coefficient of degree i (i integer between 0 and n-1) is equal to the value of bit i+1 of the associated word.

In computer science, the product of polynomials is a major issue, in particular when the degree of the polynomials to handle is high, as this is the case in the HQC scheme.

Consequently, the **h. y** product in the key generation step, the **h. r₂** and **s. r₂** products in the encryption step, and the **u. y** product in the decryption step of the HQC scheme impose an heavy computational load.

This is a major bottleneck in particular when the HQC scheme is implemented in a lightweight computing device, such as a smart card or a microcontroller, whose microprocessor has limited capacities, or in a server, for example of a bank's computer system, having to deal with a huge number of cryptographic requests at the same time.

There is thus a need to optimize the HQC scheme to minimize its impact in terms of computation time or memory footprint and respect the constraints imposed by the intended platforms on which to deploy it.

The article by T. Schamberger et al: "A Power Side-Channel Attack on the CCA2-Secure HQC KEM" discloses a side channel attack on the Key Encapsulation Mechanism of the HQC scheme, wherein notably the Additive Forward Fourier Transform is used to calculate the syndromes for decoding.

The invention therefore aims at providing an optimized HQC scheme.

To this end, an aspect of the invention is an optimized HQC method implemented by first and second end points in order to share a message **m,** the method comprising successively: setting global parameters; generating, for the first end point, based on the global parameters, a pair of keys, the pair of keys comprising a public key ${pk}^{˜}$ and a private key ${sk}^{˜}$, the public key being shared with the second end point; encrypting, by the second end-point, the message using the public key and transmitting the ciphertext c to the first end point; and, decrypting by the first end point the ciphertext using the private key to retrieve the message, the private key being made up of a first private element and a second private element and the public key being made up of a first public element and a second public element, the method involving at least one product between a first operand and a second operand, the first operand and the second operand each being a binary polynomial equivalent to a binary string of size n, characterized in that the method computes the at least one product by way of a pointwise product between a first transformed operand and a second transformed operand, the first transformed operand resulting in an Additive Fast Fourier Transform - AFFT like function applied to the first operand and the second transformed operand resulting in the AFFT like function applied to the second operand, the first transformed operand and the second transformed operand each being a vector in an AFFT domain, said vector in the AFFT domain being equivalent to a binary string of size 2n, and in that at least one element among the second private element (***ÿ***) of the private key ${sk}^{˜}$, the first public element **ḧ** of the public key ${pk}^{˜}$ and the second public element ***ÿ*** of the public key ${pk}^{˜}$ is a vector in the AFFT domain.

Another aspect of the invention is relative to a system comprising a first end point and a second end point, the system being adapted to realize the previous optimized HQC method.

Another aspect of the invention is relative to a smart card adapted to be used as the first end point of the previous system to realize the step of generating a pair of keys and the step of decrypting a ciphertext according to the previous optimized HQC.

Another aspect of the invention is relative to a server adapted to be used as the second end point of the previous system to realize the step of encrypting a message to output a ciphertext according the previous optimized HQC.

Another aspect of the invention is a non-transient information recording medium, comprising programming providing instructions to instantiate all or any of the steps of the previous optimized HQC, when those instructions are executed by the first end point or the second end point of a previous system.

The invention and its advantages will be better understood upon reading the following description of a preferred embodiment thereof, provided solely by way of example, this description being made with reference to the accompanying drawings, in which:
- Figure 1 shows an embodiment of the HQC scheme according to the prior art;
- Figure 2 shows an embodiment of the optimized HQC scheme according to the invention; and,
- Figure 3 is a computer system for implementing the optimized HQC scheme of Figure 2.

The invention relies on a class of transformation functions, which is broadly referred to as the Additive Fast Fourier Transforms - AFFTs.

AFFT is a known class of techniques for multiplying binary polynomials.

There are several variants of AFFT in the literature.

Among them, the "classical" AFFT is presented in the article S. Gao et T. Mateer, «Additive Fast Fourier Transform over Finite Fields».

A particular AFFT, called the Frobenius Fast Fourier Transform - FFFT, is presented in J. v. d. Hoeven et R. Larrieu, «The Frobenius FFT,» 2017.

Another particular AFFT, called the Truncated Additive Frobenius Fast Fourier Transform - TAFFFT, is presented in W.-D. Li, M.-S. Chen et P.-C. Kuo, «Frobenius Additive Fast Fourier Transform,» 2018 or in M.-S. Chen, C.-M. Cheng, P.-C. Kuo, W.-D. Li et B.-Y. Yang, «Multiplying boolean Polynomials with Frobenius Partitions in Additive Fast Fourier Transform», 2018.

Generally speaking, an AFFT allows the binary polynomial product "a.b" to be performed by changing the representation of the operands a and b in order to move in a reciprocal space, where the product is easier to compute.

More specifically, we have the relation: $a . b = {AFFT}^{- 1} \left(AFFT\left(a\right)⊙AFFT\left(b\right)\right)$ (1) where : "." Is the operator for the binary polynomial product ; *AFFT*(*a*) is the Additive Fast Fourier Transform of binary polynomial *a*; *AFFT*(*b*) is the Additive Fast Fourier Transform of polynomial *b* ; "⊙" is the operator for the pointwise multiplication ; and *AFFT*⁻¹ is the Additive Fast Fourier inverse Transform, or inverse AFFT (*a = AFFT*⁻¹(*AFFT*(*a*))).

This relation means that it is equivalent to perform the binary polynomial product between *a* and *b* or to perform first an *AFFT* on both *a* and b to shift into the AFFT domain, to perform the pointwise multiplication between *AFFT*(*a*) and *AFFT*(*b*) in the AFFT domain, and to perform finally an inverse *AFFT* on the result of *AFFT*(*a*) ⊙ *AFFT*(*b*).

If operand *a* is a binary word of size *n*, its transform, *ä = AFFT*(*a*), is a vector belonging to the AFFT domain. The number of coordinates of this vector but also the dimension of each coordinate vary depending of a block parameter of the AFFT. However, each coordinate is a binary string, so that a vector in the AFFT domain is equivalent of a binary word, more precisely a binary word of size 2n.

The pointwise multiplication simply consists in multiplying the coordinates of *AFFT*(*a*) and *AFFT*(*b*), i.e. for each value of j (j integer between 1 and the number of coordinates of the vectors in the AFFT domain), in multiplying the coordinate j of vector *AFFT*(*a*) with the coordinate j of vector *AFFT*(*b*).

The result *AFFT*(*a*) ⊙ *AFFT*(*b*) is still a vector in the AFFT domain.

The inverse AFFT applied on the result of the pointwise product gives the value of the n bits word *a. b.*

However, in terms of computational load, for two operands of size n, while the computation of the binary polynomial product requires of the order of 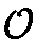 (n²) operations, the computation via the AFFT domain according to equation (1) requires only O(n.log(n)) operations.

In terms of CPU cycle time for performing one product of two operands of size n, the following results are obtained (in arbitrary unit of time):

| Size of each operand | Cycle time with AFFT *AFFT*⁻¹(*AFFT*(*a*) ⊙ *AFFT*(*b*)) | Cycle time without AFFT *a. b* |
|---|---|---|
| n=17669 | 9680 | 18000 |
| n=35851 | 21130 | 86100 |
| n=57637 | 21130 | 157400 |

However, the invention goes further by efficiently integrating AFFTs and inverse AFFTs into the HQC cryptographic protocols in order to gain on redundant transforms. In other words, the invention proposes to keep certain variables in the AFFT domain between steps of the HQC scheme and to transfer them between Alice and Bob, rather than their equivalent binary words. This will avoid having to perform an inverse transform on one variable at one end point, and the corresponding transform at the other end point. This will then reduce further the computational load of the algorithm.

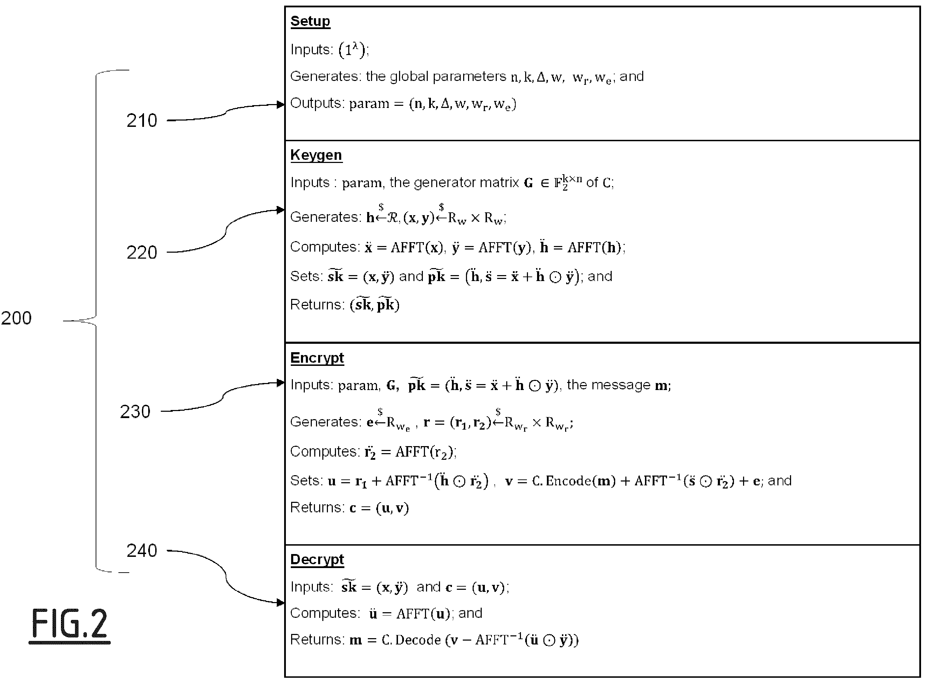

Following the notations used in Figure 1, a preferred embodiment of the optimized HQC scheme according to the invention is presented in Figure 2.

In the optimized HQC scheme 200, the setup step 210 is not altered compare to the setup step 110 of the HQC scheme 100 according to the state of the art.

The key generation step 220 is altered by computing the AFFTs of **x, y** and **h,** respectively. The transforms of these variables are denoted **ẍ**, **ÿ** and **ḧ**, respectively.

The private and public keys are now defined as ${sk}^{˜} = \left(x, {y}^{¨}\right)$ and ${pk}^{˜} = \left({h}^{¨}, {s}^{¨}={x}^{¨}+{h}^{¨}⊙{y}^{¨}\right)$ , respectively. The public key ${pk}^{˜}$ is shared with Bob.

The encryption step 230 is also altered by computing the AFFT of **r₂,** referred to as ${{r}_{2}}^{. .}$. In optimized HQC scheme 200, the ciphertext c is still the pair (**u, v**), but :
- **u** is now the sum of **r₁** and the inverse AFFT of the pointwise multiplication of **ḧ** and ${{r}_{2}}^{. .}$; and,
- **v is** now the sum of the C. Encode(.) operator on the secret message **m** to be transferred between Bob and Alice, the inverse AFFT of the pointwise multiplication of **s̈** and ${{r}_{2}}^{. .}$, and **e.**

The ciphertext **c** is transmitted to Alice.

The decryption step 240 is altered by computing the AFFT of **u.** The message m is retrieved by applying the operator C. Decode(.) on **v** minus the inverse AFFT of the pointwise multiplication of **ü** and **ÿ**.

Figure 1 shows that, between the key generation step 120 and the encryption step 130, the binary polynomial **h** is used in two different products. Thus, by using **ḧ** rather than **h** in the public key ${pk}^{˜}$, an additional calculation of the AFFT of **h** is avoided in the encryption step 230.

Similarly, Figure 1 shows that, between the key generation step 120 and the decryption step 140, the binary polynomial **y** appears in two products. Thus, by using **ÿ** rather than **y** in the public key ${sk}^{˜}$, an additional calculation of the AFFT of y is avoided in the encryption step 240.

The binary polynomial **s** appears successively in the key generation step (where its computation would implies an inverse AFFT) and the encryption step (where its use would necessitate an AFFT). Thus, by using **s̈** rather than s in the public key ${pk}^{˜}$, an inverse AFFT is avoided in the key generation step 220 and an AFFT is avoided in the encryption step 230.

According to the embodiment of Figure 2, the key generation step 220 involves the computation of three AFFTs and one pointwise multiplication, but one inverse AFFT is spared in the computation of the public key ${pk}^{˜}$ by staying in the AFFT domain. This corresponds to a reduction of 20% of the computational load for this key generation step when compare to the HQC scheme of Figure 1.

The encryption step 230 involves the computation of one AFFT, two pointwise multiplications, and two inverse AFFTs, but two AFFTs are spared for **ḧ** for and **s̈**. This corresponds to a reduction of 24% of the computational load for this encryption step when compare to the HQC scheme of Figure 1.

The decryption step 240 involves one AFFT, one pointwise multiplications, and one inverse AFFT, but one AFFT is spared for **ÿ**. This corresponds to a reduction of 18% of the computational load of this decryption step when compare to the HQC scheme of Figure 1.

In the optimized HQC scheme, the format of the public and private keys are thus altered: ${sk}^{˜} = \left(x, {y}^{¨}\right)$ ${pk}^{˜} = \left({h}^{¨},{s}^{¨}={x}^{¨}+{h}^{¨}⊙{y}^{¨}\right)$

Since the length of the transformed operand is twice the one of the operand itself, ${sk}^{˜}$ is 50% longer and ${pk}^{˜}$ is 100% longer than in the classical version of the HQC scheme. Consequently, the size of the pair of keys used in the cryptographic method is a signature of the cryptographic method is the optimized HQC scheme according to the invention.

Alternative embodiments to the optimized HQC scheme of Figure 2 are numerous. For example, to optimize the computation load of the decryption step, performed by Alice, the following operations may preferably be performed by Bob in the encryption step, to keep **ü** in the AFFT domain: ${{r}_{1}}^{. .} = AFFT \left({r}_{1}\right)$ ${u}^{¨} = {{r}_{1}}^{. .} + \left({h}^{¨}⊙{{r}_{2}}^{. .}\right)$

The ciphertext transmitted by Bob is then : ${c}^{˜} = \left({u}^{¨}, v\right)$

And the decryption step performed by Alice consists only in computing m: $m = C . Decode \left(v-{AFFT}^{- 1}\left({u}^{¨}⊙{y}^{¨}\right)\right)$

In this alternative embodiment, the encryption step now involves two AFFTs and one inverse AFFT (in place of one AFFT and two inverse AFFTs), while the decryption step involves only one inverse AFFT (in place of one AFFT and one invers AFFT).

Globally, one inverse AFFT is thus spared. The ciphertext is however longer.

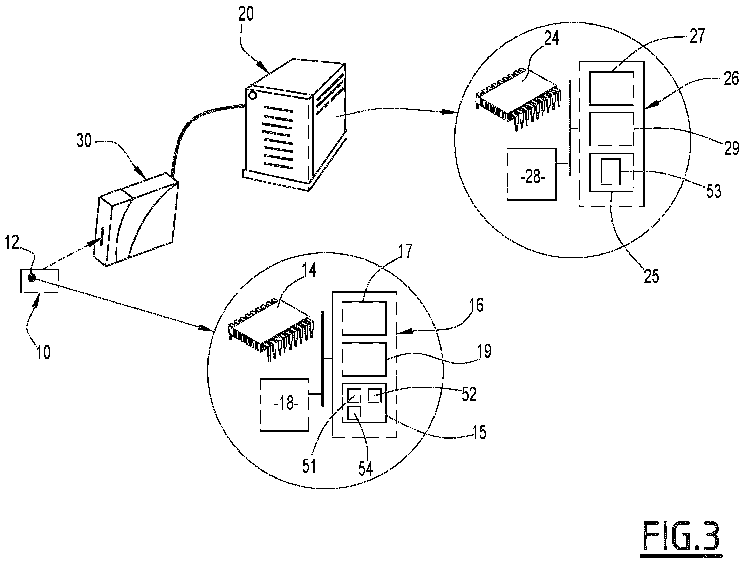

Figure 3 is a possible application of the optimised HQC scheme of figure 2 in a system comprising a first end point and a second end point, in communication one with the other.

In the example of Figure 3, the realization of the optimised HQC scheme by the system is based on the end points running pieces of software to perform the steps of the cryptographic method. Alternatively, the realization of the optimised HQC scheme by the system is based on each end points being pieces of hardware properly designed to perform the steps of the cryptographic method.

More specifically, in Figure 3, the first endpoint, Alice, is the a smart card 10, and the second end point, Bob, is a server 20.

The smart card 10 comprises a chip 12, which includes a microprocessor 14, a memory 16 and an input/output interface 18.

The memory 16 comprises a memory space 17 dedicated to store variables and parameters of the cryptographic method.

The memory 16 also stores various computer programs whose instructions, when executed by the microprocessor 14, provides the smart card 10 with corresponding functionalities.

In particular, the memory 16 stores an application 18 in order to communicate with server 20.

In particular, the memory 16 stores a cryptographic program 15, that includes a decryption module 54, optionally a setup module 51, and optionally a key generation module 52, in order to implement the corresponding steps of the optimized HQC scheme 200.

Similarly, the server 20 is a computer comprising a processor 24, a memory 26 and an input/output interface 28. The interface 28 is in particular connected to a card reader 30, in which smart cards, like smart card 10, can be inserted to communicate with the server 20.

The memory 26 comprises a memory space 27 dedicated to store variables and parameters of the cryptographic method.

The memory 26 also stores computer programs, whose instructions, when executed by the processor 24, provides the server 20 with corresponding functionalities.

In particular, the memory 26 stores an application 29 in order to communicate with a smart card inserted in the reader 30.

In particular, the memory 26 stores a cryptographic program 25, that includes an encryption module 53, in order to implement the corresponding step of the optimized HQC scheme 200.

Off line, preferably when the smart card 10 is issued, the set up module 51 is executed to defines the global parameters of the optimized HQC scheme 200. The values of these global parameters are stored in memory space 17. Alternatively, the global parameter are otherwise set (for example by a standard entity) and stored in memory 17.

Similarly, off line, preferably when the smart card 10 is issued, the key generation module 52 is executed. It reads the values of the global parameters in the memory space 17 and computes the private and public keys, ${sk}^{˜}$ and ${pk}^{˜}$. They are then stored into the memory space 17. Alternatively, the keys are otherwise generated (for example by an issuer entity) and stored in memory 17.

Then, on line, i.e. each time the smart card 10 is inserted into a reader, like the reader 30, after an initialisation procedure, the application 19 extracts the global parameters and the public key from the memory 16 and transmits them to the server 20 in a request for a secret message.

On receipt of the request, the application 29 stores the received variables and parameters in memory space 27.

The application 29 then select a message **m** pre-stored in the memory space

The application 29 launches the execution of the encryption module 53. This module reads the values of the global parameters, the public key and the message to be secretly exchanged in the memory space 27 and computes the cyphertext.

This latter is transmitted to the smart card 10, where it is stored in memory 16.

On reception of the ciphertext, the application 19 launches the decryption module 54. It reads the values of the global parameters, the private key and the ciphertext in the memory space 17 and retrieves the message m from the ciphertext.

The message m is store in memory 16.

The cryptographic method ends. The two end points are now sharing the message **m.** When this message is a cryptographic key, it can be used by each of the end point to cipher and decipher the data they exchange.

## Claims

1. An optimized Hamming Quasi-Cyclic post-quantum cryptographic method (200), implemented by first and second end points in order to share a message (**m**), the method comprising successively:
- setting (210) global parameters;
- generating (220), for the first end point (10), based on the global parameters, a pair of keys, the pair of keys comprising a public key ( ${pk}^{˜}$) and a private key ( ${sk}^{˜}$), the public key being shared with the second end point (20);
- encrypting (230), by the second end-point (20), the message using the public key to obtain a ciphertext (c) and transmitting the ciphertext to the first end point; and,
- decrypting (240) by the first end point the ciphertext using the private key to retrieve the message;
the private key being made up of a first private element and a second private element and the public key being made up of a first public element and a second public element,
the method involving at least one product between a first operand and a second operand, the first operand and the second operand each being a binary polynomial equivalent to a binary string of size n,
wherein
the method computes the at least one product by way of a pointwise product between a first transformed operand and a second transformed operand, the first transformed operand resulting in an Additive Fast Fourier Transform - AFFT like function applied to the first operand and the second transformed operand resulting in the AFFT like function applied to the second operand, the first transformed operand and the second transformed operand each being a vector in an AFFT domain, said vector in the AFFT domain being equivalent to a binary string of size 2n, and **characterized in that** at least one element among
the second private element (***ÿ***) of the private key ( ${sk}^{˜}$), the first public element (**ḧ**) of the public key ( ${pk}^{˜}$) and the second public element (***ÿ***) of the public key ( ${pk}^{˜}$) is a vector in the AFFT domain.

2. The optimized Hamming Quasi-Cyclic post-quantum cryptographic method according to claim 1, wherein the AFFT like function is selected among a classical Additive Fast Fourier Transform, a Frobenius Fast Fourier Transform, a Truncated Additive Frobenius Fast Fourier Transform and the like.

3. The optimized Hamming Quasi-Cyclic post-quantum cryptographic method according to any one of the claims 1 to 2, wherein setting of global parameters consists in, a security level (1*^{λ}*) being chosen, generating a set of global parameters comprising the integers *n, k,* Δ*, w,wᵣ, wₑ*, and wherein generating a pair of keys consists in generating $h {←}^{$} R$, and $\left(x, y\right) {←}^{$} {R}_{w} \times {R}_{w}$, computing **ẍ** = AFFT(**x**), **ÿ** = AFFT(**y**), and **ḧ** = AFFT(**h**), and setting the private key ${sk}^{˜}$ as (**x**, **ÿ**) and the public key ${pk}^{˜}$ as (**ḧ**, **s̈** = **ẍ** + **ḧ** ⊙ **ÿ**), where AFFT(**a**) is the transformed operand resulting in an Additive Fast Fourier Transform - AFFT like function applied to the operand **a**, ⊙ is the operator of the pointwise product, and 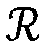 is the set of the binary words having a size of n bits, and 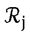 is the sub-set of 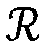 gathering the binary words having exactly j bits equal to 1.

4. The optimized Hamming Quasi-Cyclic post-quantum cryptographic method according to claim 3, wherein : encrypting the message m consists in, an encoding function C. Encode(.) being given, generating $e {←}^{$} {R}_{{w}_{e}}$, and $r = \left({r}_{1}, {r}_{2}\right) {←}^{$} {R}_{{w}_{r}} \times {R}_{{w}_{r}}$, computing ${{r}_{2}}^{. .} = AFFT \left({r}_{2}\right)$ , and setting $u = {r}_{1} + {AFFT}^{- 1} \left({h}^{¨}⊙{{r}_{2}}^{. .}\right)$, and $v = C . Encode \left(m\right) + {AFFT}^{- 1} \left({s}^{¨}⊙{{r}_{2}}^{. .}\right) + e$ , the ciphertext **c** being defined as (**u**, **v**); and decrypting the message **m** consists in, a decoding function C. Decode(.) being given, generating **ü** = AFFT(**u**) and returning **m** as C. Decode(**v**- AFFT⁻¹(**ü** ⊙ **ÿ**)).

5. The optimized Hamming Quasi-Cyclic post-quantum cryptographic method according to claim 3, wherein : encrypting the message m consists in, and encoding function C. Encode(.) being given, generating $e {←}^{$} {R}_{{w}_{e}}$, and $r = \left({r}_{1}, {r}_{2}\right) {←}^{$} {R}_{{w}_{r}} \times {R}_{{w}_{r}}$, computing ${{r}_{2}}^{. .} = AFFT \left({r}_{2}\right)$ , and ${{r}_{1}}^{. .} = AFFT \left({r}_{1}\right)$, setting ${u}^{¨} = {{r}_{1}}^{. .} + \left({h}^{¨}⊙{{r}_{2}}^{. .}\right)$ and $v = C . Encode \left(m\right) + {AFFT}^{- 1} \left({s}^{¨}⊙{{r}_{2}}^{. .}\right) + e$ , the ciphertext **c̃** being defined as (**ü**,**v**); and decrypting the message **m** consists in, a decoding function C. Decode(.) being given, returning **m** as C. Decode(**v** - AFFT⁻¹(**ü** ⊙ **ÿ**)).

6. System comprising a first end point (10) and a second end point (20), the system being adapted to realize an optimized Hamming Quasi-Cyclic post-quantum cryptographic method according to any one of claims 1 to 5.

7. Smart card adapted to be used as the first end point (10) in the system according to claim 6 to realize the step of generating a pair of keys and the step of decrypting a ciphertext according to the optimized Hamming Quasi-Cyclic post-quantum cryptographic method according to any one of claims 1 to 5.

8. Server adapted to be used as the second end point (20) in the system according to claim 6 to realize the step of encrypting a message to output a ciphertext according the optimized Hamming Quasi-Cyclic post-quantum cryptographic method according to any one of claims 1 to 5.

9. A non-transient information recording medium, comprising programming providing instructions to instantiate all or any of the steps of an optimized Hamming Quasi-Cyclic post-quantum cryptographic method according to any one of claims 1 to 5, when those instructions are executed by the first end point or the second end point of a computing system according to claim 6.

## Patentansprüche

1. Optimiertes Hamming-quasizyklisches postquantenkryptographisches Verfahren (200), implementiert durch einen ersten und einen zweiten Endpunkt zum gemeinsamen Nutzen einer Nachricht (**m**)), wobei das Verfahren nacheinander umfasst:
- Einstellen (210) globaler Parameter;
- Erzeugen (220) eines Schlüsselpaars für den ersten Endpunkt (10) auf Grundlage der globalen Parameter, wobei das Schlüsselpaar einen öffentlichen Schlüssel ( ${pk}^{˜}$) und einen privaten Schlüssel ( ${sk}^{˜}$) umfasst, wobei der öffentliche Schlüssel mit dem zweiten Endpunkt (20) geteilt wird;
- Verschlüsseln (230) der Nachricht durch den zweiten Endpunkt (20) unter Verwendung des öffentlichen Schlüssels, um einen Chiffretext (c) zu erhalten, und Übertragen des Chiffretexts an den ersten Endpunkt; und,
- Entschlüsseln (240) des Chiffretexts durch den ersten Endpunkt unter
Verwendung des privaten Schlüssels, um die Nachricht wiederzuerlangen;
wobei der private Schlüssel aus einem ersten privaten Element und einem zweiten privaten Element besteht und der öffentliche Schlüssel aus einem ersten öffentlichen Element und einem zweiten öffentlichen Element besteht,
wobei das Verfahren mindestens ein Produkt zwischen einem ersten Operanden und einem zweiten Operanden beinhaltet, wobei der erste Operand und der zweite Operand jeweils ein binäres Polynom sind, das einer binären Zeichenkette der Größe n entspricht,
wobei das Verfahren das mindestens eine Produkt mittels eines punktweisen Produkts zwischen einem ersten transformierten Operanden und einem zweiten transformierten Operanden berechnet, wobei der erste transformierte Operand aus einer auf den ersten Operanden angewendeten Additive-Fast-Fourier-Transform-AFFT-ähnlichen Funktion resultiert und der zweite transformierte Operand aus der auf den zweiten Operanden angewendeten AFFT-ähnlichen Funktion resultiert, wobei der erste transformierte Operand und der zweite transformierte Operand jeweils ein Vektor in einem AFFT-Bereich sind, wobei der Vektor in dem AFFT-Bereich einer binären Zeichenkette der Größe 2n entspricht, und **dadurch gekennzeichnet, dass** mindestens ein Element aus dem zweiten privaten Element (***ÿ***) des privaten Schlüssels ( ${sk}^{˜}$), dem ersten öffentlichen Element (**ḧ**) des öffentlichen Schlüssels ( ${pk}^{˜}$) und dem zweiten öffentlichen Element (***ÿ***) des öffentlichen Schlüssels ( ${pk}^{˜}$) ein Vektor in dem AFFT-Bereich ist.

2. Optimiertes Hamming-quasizyklisches postquantenkryptographisches Verfahren nach Anspruch 1, wobei die AFFT-ähnliche Funktion aus einer klassischen Additive Fast Fourier Transform, einer Frobenius Fast Fourier Transform, einer Truncated Additive Frobenius Fast Fourier Transform und dergleichen ausgewählt wird.

3. Optimiertes Hamming-quasizyklisches postquantenkryptographisches Verfahren nach einem der Ansprüche 1 bis 2, wobei das Einstellen globaler Parameter darin besteht, dass ein Sicherheitsniveau (1*^{λ}*) ausgewählt wird, ein Satz globaler Parameter erzeugt wird, der die ganzen Zahlen *n, k,* Δ, *w, wᵣ, wₑ*, umfasst, und wobei das Erzeugen eines Schlüsselpaars darin besteht, $h {←}^{$} R$ und $\left(x, y\right) {←}^{$} {R}_{w} \times {R}_{w}$ zu erzeugen, **ẍ** = AFFT(**x**), **ÿ** = AFFT(**y**) und **ḧ** = AFFT(**h**) zu berechnen und den privaten Schlüssel ${sk}^{˜}$ al**s** (**x**, **ÿ**) und den öffentlichen Schlüssel ${pk}^{˜}$ als (**ḧ**, **s̈** = **ẍ** + **ḧ** ⊙ **ÿ**) einzustellen, wobei AFFT(**a**) der transformierte Operand ist, der aus einer auf den Operanden a angewendeten Additive-Fast-Fourier-Trans**form-AFFT-ähnlichen Funktion resultiert,** ⊙ der Operator des punktweisen Produkts ist und R die Menge der binären Wörter mit einer Größe von n Bits ist und 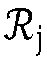 die Teilmenge von R ist, die die binären Wörter mit genau j Bits gleich 1 zusammenfasst.

4. Optimiertes Hamming-quasizyklisches postquantenkryptographisches Verfahren nach Anspruch 3, wobei : das Verschlüsseln der Nachricht **m** darin besteht, dass bei Vorgabe einer Codierungsfunktion C. Encode(.) $e {←}^{$} {R}_{{w}_{e}}$ und $r = \left({r}_{1}, {r}_{2}\right) {←}^{$} {R}_{{w}_{r}} \times {R}_{{w}_{r}}$ erzeugt werden, ${{r}_{2}}^{. .} = AFFT \left({r}_{2}\right)$ berechnet wird und $u = {r}_{1} + {AFFT}^{- 1} \left({h}^{¨}⊙{{r}_{2}}^{. .}\right)$ und $v = C . Encode \left(m\right) + {AFFT}^{- 1} \left({s}^{¨}⊙{{r}_{2}}^{. .}\right) + e$ eingestellt werden, wobei der Chiffretext **c** als (**u**, **v**) definiert ist; und das Entschlüsseln der Nachricht **m** darin besteht, dass bei Vorgabe einer Decodierungsfunktion C. Decode(. ) erzeugt wird und **m** als (**v**-) zurückgegeben wird.**ü** = AFFT(**u**)**m**C. Decode**v** AFFT⁻¹(**ü** ⊙**ÿ**)

5. Optimiertes Hamming-quasizyklisches postquantenkryptographisches Verfahren nach Anspruch 3, wobei : das Verschlüsseln der Nachricht **m** darin besteht, dass bei Vorgabe einer Codierungsfunktion C. Encode(.) $e {←}^{$} {R}_{{w}_{e}}$ und $r = \left({r}_{1}, {r}_{2}\right) {←}^{$} {R}_{{w}_{r}} \times {R}_{{w}_{r}}$ erzeugt werden, ${{r}_{2}}^{. .} = AFFT \left({r}_{2}\right)$ und ${{r}_{1}}^{. .} = AFFT \left({r}_{1}\right)$ berechnet werden, ${u}^{¨} = {{r}_{1}}^{. .} + \left({h}^{¨}⊙{{r}_{2}}^{. .}\right)$ und $v = C . Encode \left(m\right) + {AFFT}^{- 1} \left({s}^{¨}⊙{{r}_{2}}^{. .}\right) + e$ eingestellt werden, wobei der Chiffretext **c̃** als (**ü**, **v**) definiert ist; und das Entschlüsseln der Nachricht m darin besteht, dass bei Vorgabe einer Decodierungsfunktion C. Decode(.) **m** als C. Decode(**v** - AFFT⁻¹(**ü** ⊙ **ÿ**)) zurückgegeben wird.

6. System, umfassend einen ersten Endpunkt (10) und einen zweiten Endpunkt (20), wobei das System dazu eingerichtet ist, ein optimiertes Hamming-quasizyklisches postquantenkryptographisches Verfahren nach einem der Ansprüche 1 bis 5 umzusetzen.

7. Chipkarte, die dazu eingerichtet ist, als der erste Endpunkt (10) in dem System nach Anspruch 6 verwendet zu werden, um den Schritt des Erzeugens eines Schlüsselpaars und den Schritt des Entschlüsselns eines Chiffretexts gemäß dem optimierten Hamming-quasizyklischen postquantenkryptographischen Verfahren nach einem der Ansprüche 1 bis 5 umzusetzen.

8. Server, der dazu eingerichtet ist, als der zweite Endpunkt (20) in dem System nach Anspruch 6 verwendet zu werden, um den Schritt des Verschlüsselns einer Nachricht zur Ausgabe eines Chiffretexts gemäß dem optimierten Hamming-quasizyklischen postquantenkryptographischen Verfahren nach einem der Ansprüche 1 bis 5 umzusetzen.

9. Nichtflüchtiges Informationsaufzeichnungsmedium, umfassend eine Programmierung, die Anweisungen bereitstellt, um alle oder beliebige der Schritte eines optimierten Hamming-quasizyklischen postquantenkryptographischen Verfahrens nach einem der Ansprüche 1 bis 5 zu instanziieren, wenn diese Anweisungen durch den ersten Endpunkt oder den zweiten Endpunkt eines Computersystems nach Anspruch 6 ausgeführt werden.

## Revendications

1. Procédé cryptographique post-quantique Hamming quasi-cyclique optimisé (200), mis en œuvre par un premier et un deuxième points d'extrémité afin de partager un message (**m**)), le procédé comprenant successivement :
- définir (210) des paramètres globaux ;
- générer (220), pour le premier point d'extrémité (10), sur la base des paramètres globaux, une paire de clés, la paire de clés comprenant une clé publique ( ${pk}^{˜}$) et une clé privée ( ${sk}^{˜}$), la clé publique étant partagée avec le deuxième point d'extrémité (20) ;
- chiffrer (230), par le deuxième point d'extrémité (20), le message à l'aide de la clé publique afin d'obtenir un texte chiffré (c) et transmettre le texte chiffré au premier point d'extrémité ; et,
- déchiffrer (240), par le premier point d'extrémité, le texte chiffré à l'aide
de la clé privée afin de récupérer le message ;
la clé privée étant constituée d'un premier élément privé et d'un deuxième élément privé et la clé publique étant constituée d'un premier élément public et d'un deuxième élément public,
le procédé impliquant au moins un produit entre un premier opérande et un deuxième opérande, le premier opérande et le deuxième opérande étant chacun un polynôme binaire équivalent à une chaîne binaire de taille n,
dans lequel le procédé calcule ledit au moins un produit au moyen d'un produit composante par composante entre un premier opérande transformé et un deuxième opérande transformé, le premier opérande transformé résultant d'une fonction de type Transformée de Fourier Rapide Additive - AFFT appliquée au premier opérande et le deuxième opérande transformé résultant de la fonction de type AFFT appliquée au deuxième opérande, le premier opérande transformé et le deuxième opérande transformé étant chacun un vecteur dans un domaine AFFT, ledit vecteur dans le domaine AFFT étant équivalent à une chaîne binaire de taille 2n, et **caractérisé en ce qu'**au moins un élément parmi le deuxième élément privé (***ÿ***) de la clé privée ( ${sk}^{˜}$), le premier élément public (**ḧ**) de la clé publique ( ${pk}^{˜}$) et le deuxième élément public (***ÿ***) de la clé publique ( ${pk}^{˜}$) est un vecteur dans le domaine AFFT.

2. Procédé cryptographique post-quantique Hamming quasi-cyclique optimisé selon la revendication 1, dans lequel la fonction de type AFFT est sélectionnée parmi une Transformée de Fourier Rapide Additive classique, une Transformée de Fourier Rapide de Frobenius, une Transformée de Fourier Rapide Additive de Frobenius tronquée et similaires.

3. Procédé cryptographique post-quantique Hamming quasi-cyclique optimisé selon l'une quelconque des revendications 1 à 2, dans lequel la définition des paramètres globaux consiste en, un niveau de sécurité (1*^{λ}*) étant choisi, générer un ensemble de paramètres globaux comprenant les entiers *n, k,* Δ, *w, wᵣ , wₑ*, et dans lequel la génération d'une paire de clés consiste à générer $h {←}^{$} R$, et $\left(x, y\right) {←}^{$} {R}_{w} \times {R}_{w}$, calculer **ẍ** = AFFT(**x**), **ÿ** = AFFT(**y**), et **ḧ** = AFFT(**h**), et définir la clé privée ${sk}^{˜}$ comme (**x**, **ÿ**) et la clé publique ${pk}^{˜}$ comme (**ḧ**, **s̈** = **ẍ** + **ḧ** ⊙ **ÿ**), où AFFT(**a**) est l'opérande transformé résultant d'une fonction de type Transformée de Fourier Rapide Additive appliquée à l'opérande **a**, ⊙ est l'opérateur du produit composante par composante, et 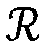 est l'ensemble des mots binaires ayant une taille de n bits, et 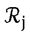 est le sous-ensemble de 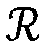 rassemblant les mots binaires ayant exactement j bits égaux à 1.

4. Procédé cryptographique post-quantique Hamming quasi-cyclique optimisé selon la revendication 3, dans lequel : le chiffrement du message **m** consiste en, une fonction de codage C. Encode(.) étant donnée, générer $e {←}^{$} {R}_{{w}_{e}}$, et $r = \left({r}_{1}, {r}_{2}\right) {←}^{$} {R}_{{w}_{r}} \times {R}_{{w}_{r}}$, calculer ${{r}_{2}}^{. .} = AFFT \left({r}_{2}\right)$, et définir $u = {r}_{1} + {AFFT}^{- 1} \left({h}^{¨}⊙{{r}_{2}}^{. .}\right)$, et $v = C . Encode \left(m\right) + {AFFT}^{- 1} \left({s}^{¨}⊙{{r}_{2}}^{. .}\right) + e$, le texte chiffré **c** étant défini comme (**u**, **v**) ; et le déchiffrement du message **m** consiste en, une fonction de décodage C. Decode(.) étant donnée, générer **ü** = AFFT(**u**) et retourner **m** comme C. Decode(**v**- AFFT⁻¹(**ü** ⊙ **ÿ**)).

5. Procédé cryptographique post-quantique Hamming quasi-cyclique optimisé selon la revendication 3, dans lequel : le chiffrement du message m consiste en, une fonction de codage C. Encode(.) étant donnée, générer $e {←}^{$} {R}_{{w}_{e}}$, et $r = \left({r}_{1}, {r}_{2}\right) {←}^{$} {R}_{{w}_{r}} \times {R}_{{w}_{r}}$, calculer ${{r}_{2}}^{. .} = AFFT \left({r}_{2}\right)$, et ${{r}_{1}}^{. .} = AFFT \left({r}_{1}\right)$, définir ${u}^{¨} = {{r}_{1}}^{. .} + \left({h}^{¨}⊙{{r}_{2}}^{. .}\right)$ et $v = C . Encode \left(m\right) + {AFFT}^{- 1} \left({s}^{¨}⊙{{r}_{2}}^{. .}\right) + e$, le texte chiffré **c̃** étant défini comme (**ü**, **v**) ; et le déchiffrement du message **m** consiste en, une fonction de décodage C. Decode(.) étant donnée, retourner **m** comme C. Decode(**v-**AFFT⁻¹(**ü** ⊙ **ÿ**)).

6. Système comprenant un premier point d'extrémité (10) et un deuxième point d'extrémité (20), le système étant adapté pour réaliser un procédé cryptographique post-quantique Hamming quasi-cyclique optimisé selon l'une quelconque des revendications 1 à 5.

7. Carte à puce adaptée pour être utilisée comme le premier point d'extrémité (10) dans le système selon la revendication 6 afin de réaliser l'étape de génération d'une paire de clés et l'étape de déchiffrement d'un texte chiffré selon le procédé cryptographique post-quantique Hamming quasi-cyclique optimisé selon l'une quelconque des revendications 1 à 5.

8. Serveur adapté pour être utilisé comme le deuxième point d'extrémité (20) dans le système selon la revendication 6 afin de réaliser l'étape de chiffrement d'un message pour produire un texte chiffré selon le procédé cryptographique post-quantique Hamming quasi-cyclique optimisé selon l'une quelconque des revendications 1 à 5.

9. Support d'enregistrement d'informations non transitoire, comprenant une programmation fournissant des instructions pour instancier toutes les étapes ou l'une quelconque des étapes d'un procédé cryptographique post-quantique Hamming quasi-cyclique optimisé selon l'une quelconque des revendications 1 à 5, lorsque ces instructions sont exécutées par le premier point d'extrémité ou le deuxième point d'extrémité d'un système informatique selon la revendication 6.
